# EUROPÄISCHE PATENTANMELDUNG

(11) **EP 4 727 036 A1**
(43) Veröffentlichungstag der Anmeldung: **15.04.2026**
(21) Anmeldenummer: 24205517.6
(22) Anmeldetag: 09.10.2024
(51) Int. Cl.: H04B 10/116, H04B 10/114, G08C 23/04

(54) **ÜBERMITTELN VON DATEN EINES FUNKTIONSGERÄTS MITTELS EINES LICHTSIGNALS AN EIN MOBILES AUSWERTEGERÄT**

(71) Anmelder: Siemens AG Österreich, 1210 Wien (AT)
(72) Erfinder: Schiefer, Martin, 3100 St. Pölten (AT); Hofmann, Andreas, 1140 Wien (AT); Spandl, Manfred, 1180 Wien (AT)
(74) Vertreter: Siemens Patent Attorneys

(57) **Zusammenfassung**

Die Erfindung betrifft ein Verfahren zum Übermitteln von Daten (56) eines Funktionsgeräts (12) mittels eines Lichtsignals an ein mobiles Auswertegerät (14), wobei das Funktionsgerät (12) ein Steuersignal für eine Signalleuchte (16) bereitstellt, das entsprechend den zu übermittelnden Daten moduliert wird, sodass das Lichtsignal durch die Signalleuchte (16) abgegeben wird, wobei das Licht (20) von einer pixelbasierten digitalen Lichterfassungseinheit (22) des Auswertegeräts erfasst wird, wobei die Lichterfassungseinheit (22) Lichtsensorelemente (24) aufweist, die in Zeilen (26) und Spalten (28) angeordnet sind, wobei von den Lichtsensorelementen erfasste Lichtwerte vom Auswertegerät ausgewertet werden, um die übermittelten Daten zu bestimmen, wobei das Auswertegerät abhängig von einem Vergleichen diejenigen Zeilen (72) für das Auswerten berücksichtigt, bei denen ein erfasster Lichtwert größer als der Mindestlichtwert ist, wobei die für das Auswerten vom Auswertegerät berücksichtigten Zeilen (72) eine Auswerteanzahl bilden, wobei die Auswerteanzahl mit einer vorgegebenen Mindestanzahl verglichen wird und abhängig von dem Vergleichen ein Meldesignal abgegeben wird.

## Beschreibung

*Unabhängig vom grammatikalischen Geschlecht eines bestimmten Begriffes sind Personen mit männlicher, weiblicher oder anderer Geschlechteridentität mit umfasst.*

Die Erfindung betrifft ein Verfahren zum Übermitteln von Daten eines Funktionsgeräts mittels eines Lichtsignals an ein mobiles Auswertegerät, wobei das Funktionsgerät ein Steuersignal für eine Signalleuchte des Funktionsgeräts bereitstellt, wobei ein Betriebszustand des Funktionsgeräts abhängig vom Steuersignal durch Abgeben von sichtbarem Licht visuell erfassbar signalisiert wird, wobei das Steuersignal entsprechend den zu übermittelnden Daten gemäß einem vorgegebenen Modulationsverfahren moduliert wird, sodass das Lichtsignal zusammen mit dem den Betriebszustand signalisierenden Licht durch die Signalleuchte abgegeben wird, wobei das von der Signalleuchte abgegebene Licht von einer pixelbasierten digitalen Lichterfassungseinheit des Auswertegeräts erfasst wird, wobei die Lichterfassungseinheit Lichtsensorelemente aufweist, die in Zeilen und Spalten angeordnet sind, wobei erfasste Lichtwerte der Lichtsensorelemente zeilenweise aufeinanderfolgend oder spaltenweise aufeinanderfolgend ausgelesen werden, wobei von den Lichtsensorelementen erfasste Lichtwerte vom Auswertegerät ausgewertet werden, um die übermittelten Daten zu bestimmen. Ferner betrifft die Erfindung auch ein System zum Übermitteln von Daten eines Funktionsgeräts des Systems mittels eines Lichtsignals an ein mobiles Auswertegerät des Systems, wobei das Funktionsgerät ausgebildet ist, ein Steuersignal für eine Signalleuchte des Funktionsgeräts bereitzustellen, um einen Betriebszustand des Funktionsgeräts abhängig vom Steuersignal durch Abgeben von sichtbarem Licht visuell erfassbar zu signalisieren, wobei das Funktionsgerät ferner ausgebildet ist, das Steuersignal entsprechend den zu übermittelnden Daten gemäß einem vorgegebenen Modulationsverfahren zu modulieren, um das Lichtsignal zusammen mit dem den Betriebszustand signalisierenden Licht durch die Signalleuchte abzugeben, wobei das Auswertegerät eine pixelbasierte digitale Lichterfassungseinheit zum Erfassen des von der Signalleuchte abgegebenen Lichts aufweist, wobei die Lichterfassungseinheit Lichtsensorelemente aufweist, die in Zeilen und Spalten angeordnet sind, wobei das Auswertegerät ausgebildet ist, von den Lichtsensorelementen erfasste Lichtwerte zeilenweise aufeinanderfolgend oder spaltenweise aufeinanderfolgend auszulesen und die von den Lichtsensorelementen erfassten Lichtwerte auszuwerten, um die übermittelten Daten zu bestimmen. Weiterhin betrifft die Erfindung auch ein Funktionsgerät des Systems.

Darüber hinaus betrifft die Erfindung auch ein Auswertegerät des Systems. Schließlich betrifft die Erfindung auch ein Rechnerprogrammprodukt für eine programmgesteuerte Rechnereinheit eines Auswertegeräts des Systems sowie ein rechnerlesbares Medium.

Gattungsgemäße Verfahren, Systeme, Funktionsgeräte sowie Auswertegeräte, Rechnerprogrammprodukte und rechnerlesbare Medien hierfür sind im Stand der Technik umfänglich bekannt. Solche Verfahren und Systeme dienen dazu, neben der Funktion der Signalleuchte des Funktionsgeräts als visuell erfassbare Betriebsanzeige zusätzliche Informationen vom Funktionsgerät auf einfache Weise erhalten zu können, ohne dass eine ergänzende Hardware erforderlich wäre, mittels der zum Beispiel ein Kommunikationsnetzwerk zum Datenaustausch angeschlossen und genutzt werden kann. In der Regel hat das Funktionsgerät wenigstens eine Signalleuchte, die dazu dient, zum Beispiel eine optische Statusanzeige beziehungsweise eine Betriebsanzeige für einen Nutzer visuell wahrnehmbar darzustellen. Eine solche Signalleuchte kann zum Beispiel eine Leuchtdiode, eine SLD oder eine andere geeignete Leuchte mit einem Leuchtmittel sein, mittels dem die gewünschte Funktion realisierbar ist. Zum Steuern der Signalleuchte nutzt das Funktionsgerät ein Steuersignal, welches von einer Steuereinheit des Funktionsgeräts, beispielsweise einer programmgesteuerten Rechnereinheit oder dergleichen, bereitgestellt werden kann. Mit der Signalleuchte kann zum Beispiel angezeigt werden, dass das Funktionsgerät für eine Aufnahme oder Durchführung einer bestimmungsgemäßen Funktion aktiviert oder betriebsbereit ist.

Funktionsgeräte der gattungsgemäßen Art sind ebenfalls umfänglich bekannt und werden in technischen Einrichtungen, beispielsweise Fertigungsstraßen, besonders im Bereich von Automationskomponenten in elektrischen Anlagen, häufig eingesetzt. Das Funktionsgerät kann zum Beispiel ein Steuergerät für eine speicherprogrammierbare Steuerung, ein Netzteil, ein Netzwerkgerät und/oder dergleichen sein.

Ein hoher Grad an Leistungsfähigkeit und Komplexität führt zu einem entsprechenden Bedarf an Überprüfung und Wartung. Obwohl eine Vielzahl von Funktionsgeräten bereits eine Fernwartung und/oder eine Ferndiagnose unterstützt, sind insbesondere einfachere Funktionsgeräte, beispielsweise Netzteile, bei einer solchen Funktionalität in der Regel nicht integriert. Gleichwohl können derartige Funktionsgeräte für die Funktion eines Gesamtsystems wichtig, insbesondere kritisch, sein. Es besteht daher ein Bedarf, auch für derartige Funktionsgeräte eine Kommunikationsmöglichkeit zu schaffen. Dies soll jedoch mit möglichst wenig zusätzlichem Aufwand erreicht werden können. Dabei soll insbesondere ein Hardwareaufwand möglichst gering sein, vorzugsweise kein zusätzlicher Hardwareaufwand erforderlich sein.

Um bei den letztgenannten Funktionsgeräten ebenfalls die Überprüfung beziehungsweise Wartung verbessern zu können, schlägt zum Beispiel die EP 4 231 547 A1 vor, eine digitale Schnittstelle für das Funktionsgerät zu schaffen, welche es unter Nutzung der Signalleuchte neben der für den Nutzer sichtbar bereitgestellten Visualisierung des Betriebszustands des Funktionsgeräts zusätzlich erlaubt, Daten vom Funktionsgerät an ein mobiles Auswertegerät zu übermitteln. Das für die Signalisierung genutzte Lichtsignal der Signalleuchte wird danach nicht nur als visuell wahrnehmbare Betriebsanzeige sondern unter Nutzung eines Modulationsverfahrens ergänzend einer zusätzlichen Nutzung zugeführt, nämlich dem Übermitteln von Daten. Für die Realisierung dieser Funktionalität steht daher lediglich das Steuersignal für die Signalleuchte zur Verfügung. Das Steuersignal wird somit entsprechend den zu übermittelnden Daten gemäß einem vorgegebenen Modulationsverfahren moduliert. Mittels des vorgegebenen Modulationsverfahrens wird somit eine ergänzende Funktionalität eingeführt, die über die mit dem Steuersignal übliche optische beziehungsweise visuelle Signalisierung hinausgeht.

Um darüber hinaus die auf die zuvor erläuterte Weise mittels des Lichtsignals übermittelten Daten empfangen zu können, ist das mobile Auswertegerät vorgesehen. Das mobile Auswertegerät ermöglicht es, das von der Signalleuchte abgegebene Licht mittels einer pixelbasierten digitalen Lichterfassungseinheit des Auswertegeräts zu erfassen. Das Auswertegerät ist daher vorzugsweise ein tragbares Gerät, was ein entsprechender Nutzer leicht mitzuführen vermag. Beispielsweise kann das mobile Auswertegerät ein tragbares Funktionsgerät, insbesondere ein Mobilfunkendgerät, vorzugsweise ein Smartphone, ein Tablet-Rechner, oder dergleichen sein. Das Auswertegerät verfügt über die Lichterfassungseinheit, die zum Beispiel eine digitale Kamera oder dergleichen sein kann. Die Lichterfassungseinheit hat Lichtsensorelemente, die in Zeilen und Spalten angeordnet sind, beispielsweise wie bei einer Digitalkamera oder dergleichen. Erfasste Lichtwerte der Lichtsensorelemente werden zeilenweise aufeinanderfolgend oder spaltenweise aufeinanderfolgend ausgelesen. Die erfassten Lichtwerte werden vom Auswertegerät ausgewertet, um die übermittelten Daten zu bestimmen. Dadurch stehen die übermittelten Daten im Auswertegerät für die weitere Nutzung zur Verfügung.

Die zu übermittelnden Daten können beispielsweise weitere Betriebszustände des Funktionsgeräts, Störungsmeldungen, Parametereinstellungen und/oder dergleichen umfassen.

In der Lichterfassungseinheit sind die Lichtsensorelemente vorzugsweise nach Art eines Rasters angeordnet. Die von den Lichtsensorelementen erfassten Lichtwerte werden entlang einer jeweiligen Zeile beziehungsweise Spalte der Lichterfassungseinheit innerhalb eines jeweiligen Auslesezeitraums ausgelesen, der kleiner als eine halbe Periodendauer einer größten der in dem vorgegebenen Modulationsverfahren genutzten Modulationsfrequenz ist. Dadurch kann die zuverlässige Datenübertragung realisiert werden. Insbesondere ermöglicht es diese optische Datenübertragung, dass eine Standardkamera eines Nutzerendgeräts beispielsweise des Mobilfunkendgeräts, insbesondere des Smartphones, die erforderliche pixelbasierte digitale Lichterfassungseinheit bereitstellt. Bei einer derartigen Kamera beziehungsweise Lichterfassungseinheit kann dann ein sogenannter "Rolling-Shutter-Effekt" aufgrund des zeilenweise beziehungsweise spaltenweisen Auslesens der von den Lichtsensorelementen erfassten Lichtwerte genutzt werden, um geeignete Abtastraten zu realisieren, die deutlich über einer Frequenz von aufeinanderfolgenden Bildern in einem Videodatenstrom der Kamera sind.

Es hat sich jedoch gezeigt, dass die Nutzung der vorbeschriebenen Technologie erfordert, dass bei der Realisierung dieser zusätzlichen Funktionalität Störungen auftreten können. In der EP 4 231 547 A1 gibt es keine Angaben dazu, welche Bedingungen für einen zuverlässigen Betrieb erforderlich sein könnten. So kann der Fall eintreten, dass zum Beispiel das Funktionsgerät zwar eine bestimmungsgemäße Modulation zu realisieren vermag, jedoch das Auswertegerät die übermittelten nicht oder nur fehlerbehaftet bereitzustellen vermag.

Der Erfindung liegt die Aufgabe zugrunde, ein Verfahren, ein System, ein Funktionsgerät sowie ein Auswertegerät dahingehend zu verbessern, dass das zuverlässige Übermitteln der Daten verbessert werden kann, insbesondere hierfür auch ein Rechnerprogrammprodukt und ein rechnerlesbares Medium anzugeben.

Als Lösung werden mit der Erfindung ein Verfahren, ein System, ein Funktionsgerät, ein Auswertegerät, ein Rechnerprogrammprodukt sowie ein rechnerlesbares Medium gemäß den unabhängigen Ansprüchen vorgeschlagen.

Vorteilhafte Weiterbildungen ergeben sich durch Merkmale der abhängigen Ansprüche.

In Bezug auf ein gattungsgemäßes Verfahren wird mit der Erfindung insbesondere vorgeschlagen, dass das Auswertegerät die erfassten Lichtwerte der Lichtsensorelemente mit einem vorgegebenen Mindestlichtwert vergleicht und abhängig von dem Vergleichen diejenigen Zeilen beziehungsweise diejenigen Spalten der Lichterfassungseinheit für das Auswerten vom Auswertegerät berücksichtigt werden, bei denen wenigstens ein erfasster Lichtwert größer als der Mindestlichtwert ist, wobei die für das Auswerten vom Auswertegerät berücksichtigten Zeilen beziehungsweise Spalten eine Auswerteanzahl bilden, wobei die Auswerteanzahl mit einer vorgegebenen Mindestanzahl verglichen wird und abhängig von dem Vergleichen der Auswerteanzahl mit der vorgegebenen Mindestanzahl ein Meldesignal vom Auswertegerät abgegeben wird.

In Bezug auf ein gattungsgemäßes System wird mit der Erfindung insbesondere vorgeschlagen, dass das Auswertegerät ausgebildet ist, die erfassten Lichtwerte der Lichtsensorelemente mit einem vorgegebenen Mindestlichtwert zu vergleichen und abhängig von dem Vergleichen diejenigen Zeilen beziehungsweise diejenigen Spalten der Lichterfassungseinheit für das Auswerten zu berücksichtigen, bei denen wenigstens ein erfasster Lichtwert größer als der Mindestlichtwert ist, wobei die für das Auswerten vom Auswertegerät berücksichtigten Zeilen beziehungsweise Spalten eine Auswerteanzahl bilden, wobei das Auswertegerät ausgebildet ist, die Auswerteanzahl mit einer vorgegebenen Mindestanzahl zu vergleichen und abhängig von dem Vergleichen der Auswerteanzahl mit der vorgegebenen Mindestanzahl ein Meldesignal vom Auswertegerät abzugeben.

In Bezug auf ein gattungsgemäßes Funktionsgerät wird mit der Erfindung vorgeschlagen, dass das Funktionsgerät gemäß der Erfindung ausgebildet ist.

In Bezug auf ein gattungsgemäßes Auswertegerät wird mit der Erfindung insbesondere vorgeschlagen, dass das Auswertegerät gemäß der Erfindung ausgebildet ist.

In Bezug auf ein gattungsgemäßes Rechnerprogrammprodukt für ein gattungsgemäßes Auswertegerät, das eine pixelbasierte digitale Lichterfassungseinheit zum Erfassen des von der Signalleuchte abgegebenen Lichts aufweist, wobei die Lichterfassungseinheit Lichtsensorelemente aufweist, die in Zeilen und Spalten angeordnet sind, wird mit der Erfindung insbesondere vorgeschlagen, dass das Rechnerprogrammprodukt Anweisungen aufweist, die die Rechnereinheit veranlassen, von den Lichtsensorelementen erfasste Lichtwerte zeilenweise aufeinanderfolgend oder spaltenweise aufeinanderfolgend auszulesen und die von den Lichtsensorelementen erfassten Lichtwerte auszuwerten, um die übermittelten Daten zu bestimmen, die erfassten Lichtwerte der Lichtsensorelemente mit einem vorgegebenen Mindestlichtwert zu vergleichen und abhängig von dem Vergleichen diejenigen Zeilen beziehungsweise diejenigen Spalten der Lichterfassungseinheit für das Auswerten zu berücksichtigen, bei denen wenigstens ein erfasster Lichtwert größer als der Mindestlichtwert ist, wobei die für das Auswerten vom Auswertegerät berücksichtigten Zeilen beziehungsweise Spalten eine Auswerteanzahl bilden, wobei die Auswerteanzahl mit einer vorgegebenen Mindestanzahl verglichen wird und abhängig von dem Vergleichen der Auswerteanzahl mit der vorgegebenen Mindestanzahl ein Meldesignal vom Auswertegerät abgegeben wird.

In Bezug auf ein gattungsgemäßes rechnerlesbares Medium wird mit der Erfindung insbesondere vorgeschlagen, dass auf dem rechnerlesbaren Medium das Rechnerprogrammprodukt gemäß der Erfindung auslesbar von einer Rechnereinheit gespeichert ist.

Die Erfindung basiert unter anderem auf der Erkenntnis, dass es für die bestimmungsgemäße Funktion des Übermittelns der Daten relevant sein kann, dass die Lichterfassungseinheit ausreichend beleuchtet wird. Bei einem sehr kurzen Abstand zwischen der Signalleuchte und der Lichterfassungseinheit kann die Funktion in der Regel immer realisiert werden. Ein sich aufgrund des Erfassungsprinzips ergebender Jitter kann dadurch ausreichend klein sein, sodass eine zuverlässige Signalverarbeitung im Auswertegerät erreicht werden kann und die mit dem Licht übermittelten Daten zuverlässig bestimmt werden können. Bei einem großen Abstand kann jedoch der Fall eintreten, dass nur wenige Zeilen beziehungsweise Spalten das von der Signalleuchte abgegebene Licht erfassen können. Wenn nur sehr wenige Zeilen beziehungsweise Spalten beleuchtet werden, kann dies unter anderem dazu führen, dass der Jitter ein vorgegebenes Maß überschreitet, wodurch die Signalverarbeitung beeinträchtigt sein kann. Das Auswertegerät kann unter Umständen die mit dem Licht übermittelten Daten nicht oder nur unzuverlässig beziehungsweise lückenhaft bestimmen. Diese Problematik kann dadurch reduziert werden, dass eine lichtabgebende Fläche der Signalleuchte möglichst groß gewählt ist, sodass infolgedessen auch eine ausreichend große beleuchtete Fläche der Lichterfassungseinheit erreicht werden kann. Gleichwohl ist es wünschenswert, wenn ein Nutzer des Auswertegeräts weiß, ob die gewünschte Funktionalität erreicht werden kann. Darüber hinaus ist zu bedenken, dass Abmessungen der Signalleuchte unter Umständen durch eine Konstruktion des Funktionsgeräts begrenzt sind und in der Regel nachträglich auch nicht beeinflusst werden können.

Vorzugsweise werden die von den Lichtsensorelementen erfassten Lichtwerte entlang einer jeweiligen Zeile oder Spalte der Lichterfassungseinheit innerhalb eines jeweiligen Auslesezeitraums ausgelesen, der kleiner als eine halbe Periodendauer einer größten in dem vorgegebenen Modulationsverfahren genutzten Modulationsfrequenz ist. Dies kann eine zuverlässige Datenübermittlung ermöglichen.

Mit der Erfindung wurde gefunden, dass es möglich ist, die Zuverlässigkeit der Übermittlung der Daten mittels des Auswertegeräts feststellen zu können. Zu diesem Zweck wurde gefunden, dass, wenn die Lichterfassungseinheit zeilenweise ausgelesen wird, eine vorgegebene Mindestanzahl von beleuchteten Zeilen als Indikator dafür dienen kann, die Zuverlässigkeit der Übermittlung der Daten zu bestimmen. Wird die Lichterfassungseinheit dagegen spaltenweise ausgelesen, kann hier eine vorgegebene Mindestanzahl von beleuchteten Spalten als Indikator dafür dienen. Für die weitere Signalverarbeitung ist es in Grunde nach unerheblich, ob ein spaltenweises oder ein zeilenweises Auslesen der Lichtwerte aus den Lichtsensorelementen der Lichterfassungseinheit vorliegt. Die vorgegebene Mindestanzahl an Zeilen beziehungsweise Spalten kann für ein jeweiliges Auswertegerät individuell vorgegeben sein, beispielsweise weil die vorgegebene Mindestanzahl von einer Konstruktion der Lichterfassungseinheit abhängig sein kann oder dergleichen. Die vorgegebene Mindestanzahl kann mittels empirischer Versuche oder auch durch Analyse von Konstruktionsdaten der Lichterfassungseinheit oder dergleichen bestimmt werden.

Das Auswertegerät vergleicht zu diesem Zweck die erfassten Lichtwerte der Lichtsensorelemente, die entweder zeilenweise oder spaltenweise ausgelesen worden sind, mit einem vorgegebenen Mindestlichtwert. Der Lichtwert kann spezifisch für ein jeweiliges Auswertegerät beziehungsweise insbesondere dessen Lichterfassungseinheit, gewählt sein. Der Mindestlichtwert ist vorzugweise derart vorgegeben, dass der jeweilige Lichtwert für die sich daran anschließende Signalverarbeitung zuverlässig genutzt werden kann. Für die weitere Signalverarbeitung durch das Auswertegerät werden insbesondere nur solche Zeilen beziehungsweise Spalten berücksichtigt, bei denen wenigstens ein erfasster Lichtwert größer als der Mindestlichtwert ist. Je nach Konstruktion des Auswertegeräts beziehungsweise dessen Lichterfassungseinheit kann vorgesehen sein, dass für das Berücksichtigen einer jeweiligen Zeile beziehungsweise einer jeweiligen Spalte mehr als ein einziger Lichtwert eines einzigen Lichtsensorelements größer als der Mindestlichtwert ist. Beispielsweise kann vorgesehen sein, dass eine jeweilige Zeile beziehungsweise eine jeweilige Spalte erst dann für das Auswerten berücksichtigt wird, wenn mehrere Lichtwerte der jeweiligen Zeile beziehungsweise Spalte größer als der Mindestlichtwert sind. Vorzugsweise handelt es sich hierbei dann um Lichtwerte von benachbart in der jeweiligen Zeile beziehungsweise in der jeweiligen Spalte angeordneten Lichtsensorelementen. Besonders bevorzugt kann vorgesehen sein, dass für das Auswerten durch das Auswertegerät nur Zeilen beziehungsweise Spalten berücksichtigt werden, bei denen die erfassten Lichtwerte von im Wesentlichen sämtlichen Lichtsensorelementen der jeweiligen Zeile beziehungsweise Spalte größer als der Mindestlichtwert sind. Je nach Bedarf kann daher für eine jeweilige Zeile beziehungsweise eine jeweilige Spalte eine Mindestanzahl von Lichtwerten vorgegeben sein, die größer als der Mindestlichtwert sind.

Die für das Auswerten vom Auswertegerät berücksichtigten Zeilen beziehungsweise Spalten bilden eine Auswerteanzahl. Die Auswerteanzahl wird mit der vorgegebenen Mindestanzahl verglichen. Abhängig von dem Vergleichen der Auswerteanzahl mit der vorgegebenen Mindestanzahl wird vom Auswertegerät ein Meldesignal abgegeben. Mit dem Meldesignal ist es also möglich, eine Information bereitzustellen, dass eine zuverlässige Übermittlung der Daten realisiert werden kann. Das Meldesignal kann jedoch auch dazu dienen, eine Information bereitzustellen, dass eine zuverlässige Übermittlung der Daten aktuell nicht möglich ist. Die Information kann für einen Nutzer erfassbar ausgegeben werden, beispielsweise visuell auf einer entsprechenden Anzeigeeinheit des Auswertegeräts, akustisch, durch eine akustische Ausgabeeinheit und/oder dergleichen. Für den Nutzer kann somit die Information zur Verfügung gestellt werden, und der Nutzer kann bedarfsweise Maßnahmen vorsehen, um die Kommunikationsfähigkeit zu verbessern. Eine Maßnahme kann zum Beispiel darin bestehen, dass der Nutzer den Abstand zwischen einer das Licht abgebenden Fläche der Signalleuchte und der Lichterfassungseinheit des Auswertegeräts, insbesondere einer das Licht empfangenden Fläche der Lichterfassungseinheit, reduziert. Mit der Erfindung ist es daher möglich, die Zuverlässigkeit der Übermittlung der Daten zu bestimmen und dem Nutzer zu signalisieren. Dadurch kann die Nutzung der Erfindung verbessert werden, unter anderem auch weil der Nutzer über die Zuverlässigkeit der Kommunikation informiert werden kann.

Gemäß einer Weiterbildung wird vorgeschlagen, dass die Signalleuchte mit einem optischen Element verbunden wird, wobei das optische Element eine erste lichtaufnehmende Fläche aufweist, die das von der Signalleuchte abgegebene Licht empfängt, und wobei das optische Element eine von der ersten lichtaufnehmenden Fläche unterschiedliche zweite lichtabgebende Fläche aufweist, die größer als die erste Fläche ist und die das von der ersten lichtaufnehmenden Fläche empfangene Licht abgibt. Mit dem optischen Element ist es somit möglich, die lichtabgebende Fläche der Signalleuchte zu vergrößern und dadurch die Beleuchtung der Lichterfassungseinheit des Auswertegeräts zu verbessern. Je größer die lichtabgebende Fläche des optischen Elements ist, desto zuverlässiger ist eine Übermittlung der Daten auch bei einem großen Abstand möglich. Demnach kann natürlich auch die Signalleuchte entsprechend mit einer entsprechend großen lichtabgebenden Fläche ausgerüstet sein. Häufig ist es jedoch so, dass die Signalleuchte im Funktionsgerät nicht verändert werden kann und unter Umständen bereits aus konstruktiven Gründen des Funktionsgeräts vergleichsweise klein ausfällt. Darüber hinaus kann insbesondere dann, wenn eine kleine lichtabgebende Fläche der Signalleuchte vorliegt, durch das optische Element eine Lichtabgabe über eine größere lichtabgebende Fläche erreicht werden, wodurch nicht nur der Abstand, der für eine zuverlässige Übermittlung der Daten erforderlich ist, vergrößert werden kann, sondern unter Umständen auch bauliche Randbedingungen besser berücksichtigt werden können, die einen kleinen Abstand zwischen dem Funktionsgerät und dem Auswertegerät, insbesondere der Signalleuchte und der Lichterfassungseinheit, begrenzen können. Das optische Element kann ein überwiegend transparenter, Licht leitender Körper sein, der gegebenenfalls auch opak ausgebildet sein kann. Das optische Element ist vorzugsweise derart ausgebildet, dass es zumindest in Bezug auf ein Führen des Lichts eine möglichst geringe Trägheit in Bezug auf Helligkeitsschwankungen bereitstellt, sodass das modulierte Licht im Wesentlichen zumindest in Bezug auf die Modulation nicht beeinträchtigt wird. Das optische Element kann beispielsweise unter Nutzung eines transparenten Kunststoffkörpers beziehungsweise Glaskörpers gebildet sein. Das optische Element ferner ein oder mehrere Prismen, ein oder mehrere Linsen, Kombinationen hiervon und/oder dergleichen aufweisen. Das optische Element kann zum Beispiel mit der Signalleuchte und/oder mit der Lichterfassungseinheit verbunden sein. Die Verbindung kann fix oder auch lösbar ausgebildet sein.

Gemäß einer Weiterbildung wird vorgeschlagen, dass abhängig von dem Vergleichen der Auswerteanzahl mit der vorgegebenen Mindestanzahl mit dem Meldesignal eine Handlungsanweisung ausgegeben wird. Die Handlungsanweisung kann beispielsweise akustisch und/oder visuell auf der Anzeige des Auswertegeräts ausgegeben werden. Die Handlungsanweisung kann beispielsweise darauf gerichtet sein, dass der Nutzer einen Abstand zwischen dem Auswertegerät und dem Funktionsgerät reduziert, eine Ausrichtung der Lichterfassungseinheit gegenüber der Signalleuchte überprüft oder anpasst, bei Bedarf eine Lichtstärke der Signalleuchte erhöht und/oder dergleichen. Beispielsweise kann die Handlungsanweisung auch umfassen, dass ein bestehender Abstand zwischen dem Funktionsgerät und dem Auswertegerät reduziert, zum Beispiel halbiert, wird oder dergleichen. Das Auswertegerät kann zu diesem Zweck eine entsprechende Signalverarbeitung der aus der Lichterfassungseinheit ausgelesenen Lichtwerte vornehmen, um basierend hierauf die Handlungsanweisung bestimmen zu können. Da in der Regel die optischen Eigenschaften der Lichterfassungseinheit im Auswertegerät bekannt sind, kann hierauf basierend eine vergleichsweise konkrete Handlungsanweisung an den Nutzer ausgegeben werden, um die Zuverlässigkeit der Kommunikation, insbesondere der Übermittlung der Daten, zu erreichen oder zu verbessern.

Gemäß einer Weiterbildung wird vorgeschlagen, dass abhängig von dem Vergleichen der Auswerteanzahl mit der vorgegebenen Mindestanzahl eine Abstandsänderung zwischen der Signalleuchte und der Lichterfassungseinheit vorgeschlagen wird. Aufgrund der in der Regel bekannten Eigenschaften der Lichterfassungseinheit, insbesondere deren optischen Eigenschaften, kann beispielsweise anhand der für die Auswertung in Betracht gezogenen Zeilen beziehungsweise Spalten im Vergleich zur Gesamtzahl der Spalten beziehungsweise Zeilen eine zweckmäßige Abstandsänderung ermittelt, insbesondere geschätzt, werden, um die Übermittlung der Daten zu verbessern beziehungsweise zu ermöglichen. So kann zum Beispiel Verkleinerung des Abstands empfohlen werden. Es kann ferner die Nutzung des optischen Elements empfohlen werden, um die Funktionalität zu erreichen oder zu verbessern. Darüber hinaus kann auch erreicht werden, dass eine konkrete Abstandsänderung, beispielsweise eine Abstandsverkürzung um eine vorgegebene Länge, beispielsweise einige Zentimeter, oder dergleichen bestimmt wird, die mit der Handlungsanweisung ausgegeben werden kann. Dadurch kann der Nutzer bei der Nutzung der Erfindung zuverlässig unterstützt werden.

Es kann ferner vorgesehen sein, dass eine Lichtabgabefläche der Signalleuchte ermittelt wird und abhängig von der Lichtabgabefläche ein Betriebsabstand bestimmt wird. Das Ermitteln der Lichtabgabefläche kann dem Grunde nach manuell durch Vermessen der Lichtabgabefläche der Signalleuchte durchgeführt werden. Die ermittelte Fläche kann dann über eine Eingabeeinheit des Auswertegeräts eingegeben werden, woraufhin das Auswertegerät abhängig von der Lichtabgabefläche den Betriebsabstand bestimmt, der eine zuverlässige Übermittlung der Daten erlaubt. Der Betriebsabstand kann zum Beispiel ein maximaler Betriebsabstand sein. Es kann aber auch vorgesehen sein, dass die Lichtabgabefläche der Signalleuchte automatisiert mittels des Auswertegeräts bestimmt wird. Zu diesem Zweck kann das Lichtauswertegerät in einer vorgegebenen Position unter vorgegebenen Daten gegenüber dem Funktionsgerät angeordnet werden, sodass mittels der Lichterfassungseinheit und einer geeigneten Auswertung der Lichtwerte der Betriebsabstand ermittelt werden kann. Zu diesem Zweck kann ferner vorgesehen sein, dass das Auswertegerät in einen Initialisierungsmodus geschaltet wird oder ein solcher Modus aktiviert wird, um den Betriebsabstand zu ermitteln. Das Aktivieren des Initialisierungsmodus kann beispielsweise durch eine Eingabe des Nutzers am Auswertegerät erfolgen. Die Eingabe kann beispielsweise manuell über eine Eingabetatstatur, akustisch und/oder dergleichen erfolgen.

Es wird ferner vorgeschlagen, dass das Auswertegerät ein Smartphone aufweist. Dadurch ist es auf einfache Weise möglich, eine Vielzahl von kostengünstigen Auswertegeräten zur Verfügung zu stellen und für die Erfindung nutzbar zu machen.

Besonders vorteilhaft erweist es sich, wenn das Auswertegerät ein Smartphone oder Tablet aufweist, insbesondere durch ein Smartphone gebildet ist, wobei das Smartphone beziehungsweise das Tablet eine Kamera als Lichterfassungseinheit aufweist, die die erfassten Lichtwerte in Form von Bilddaten bereitstellt, wobei auf dem Smartphone beziehungsweise dem Tablet eine Anwendung installiert ist, die die von der Kamera bereitgestellten Bilddaten auswertet, um die übermittelten Daten zu bestimmen. Auf diese Weise ist es möglich, ein handelsübliches Smartphone beziehungsweise Tablet als Auswerteeinheit zu ertüchtigen. Natürlich kann diese Weiterbildung ebenso bei einem entsprechend ausgebildeten Tablet oder LapTop, gegebenenfalls unter Nutzung einer Web-Cam, realisiert sein. Vorzugsweise enthalten die Bilddaten Bilddatensätze. Es brauchen daher für die Nutzung der Erfindung keine separaten Auswertegeräte konstruiert zu werden. Vielmehr kann ein handelsübliches Smartphone auf einfache Weise durch Installieren einer App dazu ertüchtigt werden, die Funktionen des Auswertegeräts in Verbindung mit der Kamera als Lichterfassungseinheit zu realisieren. Insbesondere wenn das Auswertegerät eine programmgesteuerte Rechnereinheit aufweist, kann vorgesehen sein, dass die Anwendung ein Rechnerprogrammprodukt ist.

Die für das erfindungsgemäße Verfahren angegebenen Vorteile und Wirkungen gelten gleichmäßig auch für das erfindungsgemäße System, das erfindungsgemäße Funktionsgerät und die erfindungsgemäße Auswerteeinheit sowie umgekehrt. Insbesondere können daher auch Verfahrensmerkmale als Vorrichtungsmerkmale oder umgekehrt formuliert sein.

Bei den im Folgenden erläuterten Ausführungsbeispielen handelt es sich um bevorzugte Ausführungsformen der Erfindung. Die vorhergehend in der Beschreibung angegebenen Merkmale, Merkmalskombinationen sowie auch die in der folgenden Beschreibung von Ausführungsbeispielen genannten und/oder in den Figuren alleine gezeigten Merkmale und Merkmalskombinationen sind nicht nur in der jeweils angegebenen Kombination, sondern auch in anderen Kombinationen verwendbar. Es sind somit auch Ausführungen von der Erfindung umfasst beziehungsweise als offenbart anzusehen, die in den Figuren nicht explizit gezeigt und erläutert sind, jedoch durch separierte Merkmalskombinationen aus den erläuterten Ausführungsformen hervorgehen und erzeugbar sind. Die anhand der Ausführungsbeispiele dargestellten Merkmale, Funktionen und/oder Wirkungen können für sich genommen jeweils einzelne, unabhängig voneinander zu betrachtende Merkmale, Funktionen und/oder Wirkungen der Erfindung darstellen, welche die Erfindung jeweils auch unabhängig voneinander weiterbilden. Daher sollen die Ausführungsbeispiele auch andere Kombinationen als die in den erläuterten Ausführungsformen umfassen. Darüber hinaus können die beschriebenen Ausführungsformen auch durch weitere der bereits beschriebenen Merkmale, Funktionen und/oder Wirkungen der Erfindung ergänzt sein.

In den Figuren bezeichnen gleiche Bezugszeichen gleiche Merkmale beziehungsweise Funktionen.

Dabei zeigen:
FIG 1 in einer schematischen Blockdarstellung ein System zum Übermitteln von Daten eines Netzteils mittels eines Lichtsignals an ein Smartphone,
FIG 2 in einer schematischen Blockdarstellung einen Ausschnitt des Smartphones gemäß FIG 1 mit einer Kamera zum Erfassen und Demodulieren der Daten,
FIG 3 eine schmatische Signaldarstellung eines von der Kamera bereitgestellten Videodatenstroms,
FIG 4 eine schematische Signaldarstellung für ein 4-FSK-Modulationsverfahren zum Übermitteln der Daten durch das System gemäß FIG 1,
FIG 5 eine schematische Darstellung eines Bildes mit durch die Kamera gemäß FIG 2 erfassten Lichtwerten, die zeilenweise ausgelesen werden,
FIG 6 eine schematische Signaldiagrammdarstellung zu einer ersten Situation in Bezug auf das zeilenweise Auslesen von Lichtsensorelementen der Kamera gemäß FIG 2,
FIG 7 eine schematische Signaldiagrammdarstellung wie FIG 6 zu einer zweiten Situation in Bezug auf das zeilenweise Auslesen von Lichtsensorelementen der Kamera gemäß FIG 2,
FIG 8 eine schematische Signaldiagrammdarstellung wie FIG 6 zu einer dritten Situation in Bezug auf das zeilenweise Auslesen von Lichtsensorelementen der Kamera gemäß FIG 2, und
FIG 9 ein schematisches Flussdiagramm zum Bestimmen eines Meldesignals.

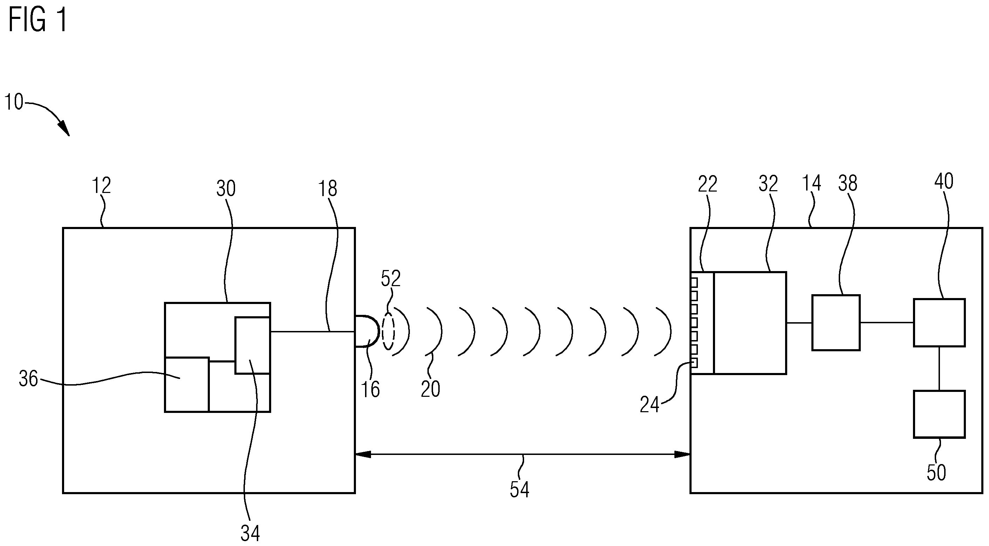

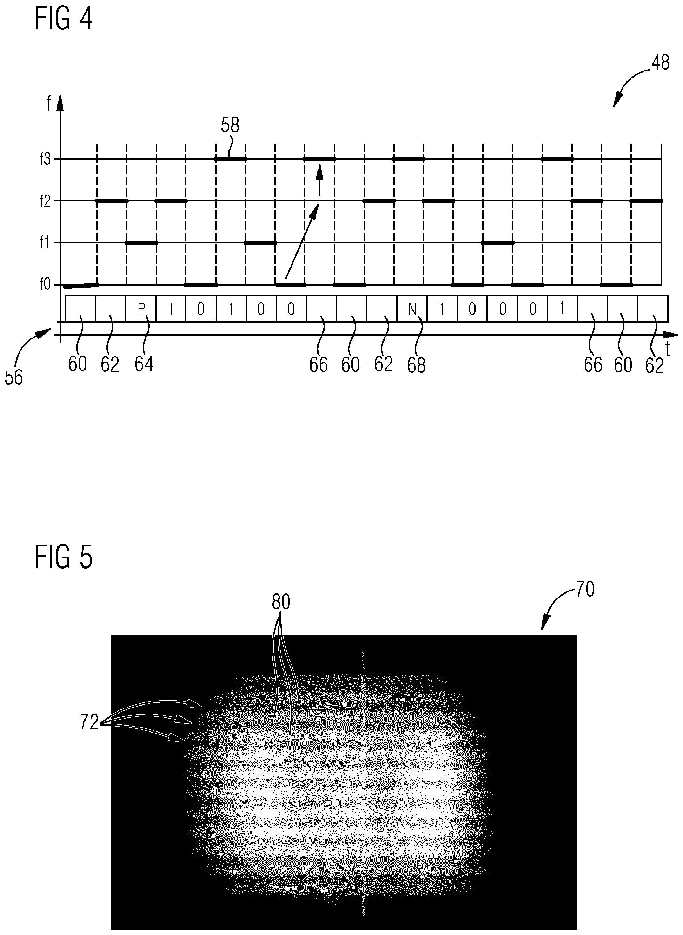

FIG 1 zeigt in einer schematischen Blockdarstellung ein System 10 zum Übermitteln von Daten 56 (FIG 4) eines Netzteils 12 als Funktionsgerät des Systems 10 mittels eines Lichtsignals an ein Smartphone 14 als mobiles Auswertegerät des Systems 10. Das Netzteil 12 ist ausgebildet, ein Steuersignal für eine Signalleuchte 16 des Netzteils 12 bereitzustellen. Die Signalleuchte 16 ist vorliegend durch eine Leuchtdiode gebildet, die über eine Steuerleitung 18 mit einem Steuermodul 30 des Netzteils 12 elektrisch verbunden ist. Das Steuermodul 30 kann einen oder mehrere Betriebszustände des Netzteils 12 bestimmen oder vorgeben und gibt abhängig vom jeweils aktuellen Betriebszustand ein entsprechendes Steuersignal auf die Steuerleitung 18, um den jeweiligen Betriebszustand des Netzteils 12 abhängig vom Steuersignal durch Abgeben von sichtbarem Licht 20 durch die Signalleichte 16 visuell erfassbar zu signalisieren. In der vorliegenden Ausgestaltung ist vorgesehen, dass der Betriebszustand durch einen Aktivzustand bestimmt ist, indem das Netzteil 12 in bestimmungsgemäßer Weise eine elektrische Energieversorgung für ein weiteres, nicht dargestelltes Gerät bereitstellt. Das Licht 20 ist von einem nicht dargestellten Nutzer mittels seines Auges visuell erfassbar, sodass er unmittelbar erkennen kann, dass das Netzteil 12 im aktivierten Betriebszustand ist, um die gewünschte Energieversorgung bereitzustellen.

Das Netzteil 12 ist vorliegend Bestandteil einer nicht weiter dargestellten Anlagensteuerung einer Fertigungsanlage. Insbesondere für die Überwachung beziehungsweise Wartung der Anlage ist es wünschenswert, wenn weitere Daten des Netzteils 12 verfügbar sind, beispielsweise eine aktuelle elektrische Leistung des Netzteils 12, ein aktueller Strom, eine aktuelle Spannung, Daten in Bezug auf Schutzfunktionen, mit der eine Überlastung des Netzteils 12 begrenzt oder vermieden werden kann, eine Temperatur und/oder dergleichen. Im Stand der Technik ist es hierfür üblich, das Netzteil 12 mit einem Kommunikationsnetzwerk zu verbinden, sodass die gewünschten Daten über das Kommunikationsnetzwerk abgefragt werden können. Zu diesem Zweck ist es im Stand der Technik üblich, eine entsprechende zusätzliche Hardware und eine entsprechende zusätzliche Software im Netzteil 12 vorzusehen, mittels welchen die gewünschte Funktionalität erreicht werden kann. Dies ist jedoch aufwändig und teuer und insbesondere bei Anlagen, die eine Vielzahl von beispielsweise kleineren Funktionsgeräten aufweisen, ineffizient.

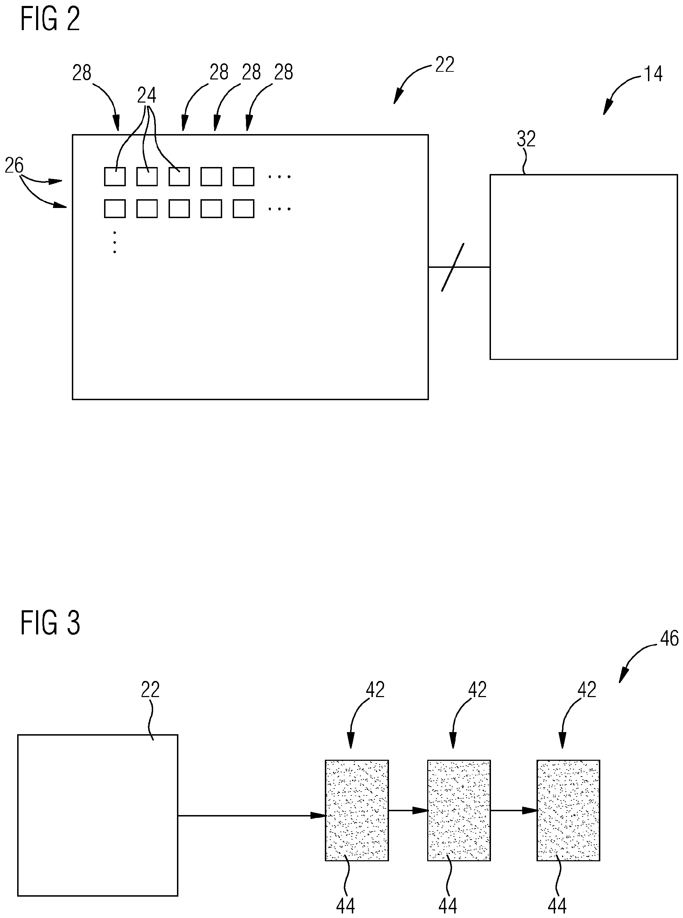

Um diesen Nachteil zu reduzieren, kann das von der Signalleuchte 16 abgegebene Licht 20 ergänzend genutzt werden, um die Daten 56 an das Smartphone 14 zu übertragen. Auf diese Weise braucht keine separate Hardware im Netzteil 12 mehr vorgesehen zu sein. Vielmehr kann das Steuersignal entsprechend den zu übermittelnden Daten 56 gemäß einem vorgegebenen Modulationsverfahren 48 moduliert werden, um das Lichtsignal zusammen mit dem den Betriebszustand signalisierenden Licht 20 durch die Signalleuchte 16 abzugeben. Dieses abgegebene Licht 20 kann mittels des Smartphones 14, und zwar dessen Kamera 22 erfasst werden. Dabei kann berücksichtigt werden, dass die Kamera 22 in der Regel als Digitalkamera in Form einer pixelbasierten digitalen Lichterfassungseinheit ausgebildet ist, die Lichtsensorelemente 24 aufweist, die in Zeilen 26 und Spalten 28 angeordnet sind, sowie dies anhand von FIG 2 ersichtlich ist.

Das Smartphone 14 weist eine Steuereinheit 32 auf, die unter anderem eine nicht weiter dargestellte programmgesteuerte Rechnereinheit umfasst. Die Steuereinheit 32 ist mit der Kamera 22 kommunikationstechnisch gekoppelt und ausgebildet, von den Lichtsensorelementen 24 erfasste Lichtwerte zeilenweise aufeinanderfolgend oder auch spaltenweise aufeinanderfolgend auszulesen. Sind alle Zeilen 26 beziehungsweise Spalten 28 aufeinanderfolgend ausgelesen, kann dieser Vorgang zyklisch wiederholt werden, sodass die erfassten Lichtwerte in Form eines Videodatenstroms 46 von Bildern 42 mit Bilddaten 44 bereitgestellt werden, die unter anderem die übermittelten Daten 56 enthalten. Die Steuereinheit 32 wertet die erfassten Lichtwerte aus und bestimmt die übermitteln Daten 56.

Das System 10 ist dabei derart ausgelegt, dass die von den Lichtsensorelementen 24 erfassten Lichtwerte entlang einer jeweiligen Zeile 26 oder Spalte 28 der Lichterfassungseinheit 24 innerhalb eines jeweiligen Auslesezeitraums ausgelesen werden, der kleiner als eine halbe Periodendauer der größten in dem vorgegebenen Modulationsverfahren 48 genutzten Modulationsfrequenzen f0, f1, f2, f3 ist. Dies ist anhand von FIG 4 weiter erläutert.

In der vorliegenden Ausgestaltung ist vorgesehen, dass das Netzteil 12 ausgebildet ist, in dem vorgegebenen Modulationsverfahren 48 die Modulationsfrequenzen f0, f1, f2, f3 des Modulationsverfahrens 48 im Rahmen eines Frequenzumtastverfahrens (englisch: frequency shift keying; FSK) zu verwenden, die einerseits größer als 1,2 kHz sind und andererseits kleiner als 5 kHz sind. Es handelt sich also vorliegend um ein 4-FSK-Modulationsverfahren. Diese Auswahl ermöglicht es, dass einerseits die von dem vorgegebenen Modulationsverfahren 48 genutzten Modulationsfrequenzen f0, f1, f2, f3 größer als 1,2 kHz sind, sodass ein Nutzer mit seinem Auge Lichtschwankungen im Wesentlichen nicht zu erkennen vermag. Das hat den Vorteil, dass aus Nutzersicht die Signalleuchte 16 weiterhin kontinuierlich leuchtet, wenn der jeweilige Betriebszustand angezeigt wird, und unter anderem ein Flackern aufgrund der Modulation vermieden werden kann. Die visuelle Signalisierungsfunktion der Signalleuchte 16 kann dadurch im Wesentlichen ungestört aufrechterhalten werden.

Zugleich ermöglicht es die Erfindung, mit dem Licht 20 trotzdem die Lichtsignale abzugeben, mit denen die Daten 56 übertragen werden können. Zu diesem Zweck ist vorgesehen, dass die Modulationsfrequenzen kleiner als 5 kHz sind. Dabei wird berücksichtigt, dass es sich bei der Kamera 22 um eine Kamera handelt, die als pixelbasierte digitale Kamera ausgebildet ist und bei der die Lichtsensorelemente 24 in den Zeilen 26 und den Spalten 28 angeordnet sind. Je nach Konstruktion des Smartphones 14 kann vorgesehen sein, dass die Zeilen 26 entweder zyklisch zeilenweise aufeinanderfolgend oder entsprechend Spalten zyklisch spaltenweise aufeinanderfolgend ausgelesen werden. Für die Funktion der Erfindung ist dies jedoch nicht relevant. Unter Nutzung des Rolling-Shutter-Effekts, der aufgrund dieser Signalverarbeitung der Kamera 22 im Smartphone 14 genutzt wird, ist es möglich, aus den Lichtsignalen die Daten 56 zu bestimmen.

Wie aus FIG 1 ferner ersichtlich ist, weist das Steuermodul 30 einen Frequenzumtastmodulator 34 auf, der die Daten 56 aus einem Datenspeicher 36 des Steuermoduls 30 empfängt und entsprechend dem vorgegebenen Modulationsverfahren 48 auf das Steuersignal aufmoduliert, sodass das modulierte Steuersignal über die Steuerleitung 18 an die Signalleuchte 16 abgegeben wird.

Die Steuereinheit 32 ist ferner an einen Frequenzumtastdemodulator 38 angeschlossen, mittels dem eine Demodulation des erfassten Lichtsignals realisiert werden kann. Der Frequenzumtastdemodulator 38 liefert die auf diese Weise bestimmten Daten 56 an die Verarbeitungseinheit 40 des Smartphones 14, sodass diese bedarfsgerecht weiterverarbeitet werden können. Die Weiterverarbeitung kann zum Beispiel darin bestehen, dass die Daten 56 an eine entfernte Zentrale über ein Mobilfunknetz übermittelt werden. Es kann auch vorgesehen sein, dass die Daten 56 auswählbar auf einem Bildschirm des Smartphones 14 visuell dargestellt werden.

FIG 2 zeigt in einem schematischen Blockdiagramm die Kamera 22 mit den Lichtsensorelementen 24, die in den Zeilen 26 und den Spalten 28 angeordnet sind. Über eine entsprechende nicht dargestellte elektrische Matrixverschaltung sind die Lichtsensorelemente 24 mit der Steuereinheit 32 des Smartphones 14 elektrisch verbunden. Die Steuereinheit 32 ist ausgebildet, das entsprechende Auslesen der Lichtwerte zu realisieren. Die Steuereinheit 32 weist die nicht dargestellte programmgesteuerte Rechnereinheit auf.

FIG 3 zeigt in einer schematischen Signaldarstellung den von der Kamera 22 bereitgestellten Videodatenstrom 46. Aus FIG 3 ist ersichtlich, dass der Videodatenstrom 46 aufeinanderfolgende Bilder 42 umfasst, wobei jedes Bild 42 entsprechende Bilddaten 44 enthält. Die Bilddaten 44 entsprechen den jeweiligen durch die Lichtsensorelemente 24 erfassten Lichtwerten. So kann beispielsweise einem jeweiligen Pixel des Bilds 42 ein entsprechender Lichtwert eines jeweiligen Lichtsensorelements 24 zugeordnet werden. In der vorliegenden Ausgestaltung ist vorgesehen, dass die Lichtwerte als digitale Bilddaten 44 vorliegen.

In der vorliegenden Ausgestaltung ist ferner vorgesehen, dass als Modulationsverfahren 48 ein Frequenzumtastverfahren genutzt wird. FIG 4 zeigt eine schematische Signaldarstellung für ein in der vorliegenden Ausgestaltung genutztes Modulationsverfahren, welches ein 4-FSK-Modulationsverfahren ist und zum Übermitteln der Daten 56 durch das System 10 gemäß FIG 1 dient. Wie aus FIG 4 ersichtlich ist, nutzt das Frequenzumtastverfahren die Modulationsfrequenzen f0, f1, f2, f3, die vorliegend jeweils in einem ganzzahligen Verhältnis zueinander stehen. Darüber hinaus ist aus FIG 4 ersichtlich, dass aufeinanderfolgenden Bits der Daten 56 mittels dem vorgegebenen Modulationsverfahren 48 jeweils zwei voneinander unterschiedliche Modulationsfrequenzen f0, f1, f2, f3 zugeordnet werden, die dem Übermitteln des jeweiligen Bits dienen. Ein Graph 58 kennzeichnet einen Frequenzverlauf, den er durch eine Datenfolge gemäß den in FIG 4 dargestellten Daten 56 zur Folge hat. Wie anhand des Graphen 58 ersichtlich ist, werden dem Datenstrom 56 im Rahmen des Modulationsverfahrens 48 ergänzend Bits hinzugefügt, und zwar ein Initialisierungsbit 60, ein Startbit 62, ein Bit 64 zum Anzeigen einer positiven Logik, ein Stoppbit 66 und ein Bit 68 zum Anzeigen einer negativen Logik. Der auf diese Weise vorbereitet Datenfolge werden dann im Rahmen des Modulationsverfahrens 48 die entsprechenden Modulationsfrequenzen f0, f1, f2, f3 gemäß dem Graphen 58 zugeordnet. Dieses Signal wird dann dem Steuersignal auf der Steuerleitung 18 überlagert, sodass es durch die Signalleuchte 16 mit dem Licht 20 als Lichtsignal abgegeben werden kann.

Wie aus FIG 4 ersichtlich ist, beginnt der Datenstrom mit einem Initialisierungsbit 60, dem ein Startbit 62 folgt. Dem Initialisierungsbit 60 ist vorliegend immer die Modulationsfrequenz f0 zugeordnet. Dem Initialisierungsbit 60 folgt das Startbit 62, dem vorliegend immer die Modulationsfrequenz f2 zugeordnet ist. Dadurch ist es einem Empfänger, hier dem Smartphone 14, möglich, den Beginn einer Datenfolge zu erkennen. Als Nächstes folgt im vorliegenden Datenstrom die Übermittlung des Bits 64 für die Anzeige der positiven Logik, in dem die Modulationsfrequenz f1 übermittelt. Daran schließt sich die Übermittlung von Datenbits 10100 an, wobei jeweilige Modulationsfrequenzen übermittelt werden, wie sie anhand des Graphen 58 ersichtlich sind. Damit beim Übermitteln des letzten Bits, welches durch die Modulationsfrequenz f0 übermittelt wird, nicht ein Signalanfang übermittelt wird, wird im Folgenden als Stoppbit 66 die Modulationsfrequenz f3 übermittelt.

Daran schließt sich die erneute Übermittlung des Initialisierungsbits 60 und des Startbits 62 an, sodass empfängerseitig, das heißt, seitens des Smartphones 14, ersichtlich ist, dass jetzt eine neue Datenfolge folgt. Nach den Startbit 62 wird nun das Bit 68 für die negative Logik zunächst übermittelt, indem die Modulationsfrequenz f3 übertragen wird. Daran schließt sich die Übermittlung einer Datenfolge 10001 an, zu welchem Zweck die Modulationsfrequenzen gemäß dem Graphen 58 übermittelt werden. Schließlich endet diese Übermittlung mit dem Stoppbit 66, dem in diesem Fall die Modulationsfrequenz f2 zugeordnet ist. Daran schließt sich eine erneute Übermittlung des Initialisierungsbits 60 und des Startbits 62 an, so wie dies bereits zuvor erläutert wurde, woraufhin eine weitere Bitfolge übermittelt werden kann, die jedoch in FIG 4 nicht mehr dargestellt ist.

Wie aus FIG 4 ersichtlich ist, wechselt das Modulationsverfahren 48 an einem Übergang von zwei aufeinanderfolgenden Bits der Daten 56 die Modulationsfrequenz von einer ersten Modulationsfrequenz zu einer zweiten Modulationsfrequenz. Dadurch ist es empfängerseitig gut erkennbar, dass ein neues Bit gesendet wird.

In einer alternativen Ausgestaltung kann vorgesehen sein, dass jedem Bit der Daten 56 mittels des vorgegebenen Modulationsverfahrens 48 zwei voneinander unterschiedliche Modulationsfrequenzen f0, f1, f2, f3 zugeordnet werden, die dem Übermitteln des jeweiligen Bits dienen. Das heißt, bei dieser Ausgestaltung ändert sich die Modulationsfrequenz f0, f1, f2, f3 während der Übertragung eines jeweiligen Bits.

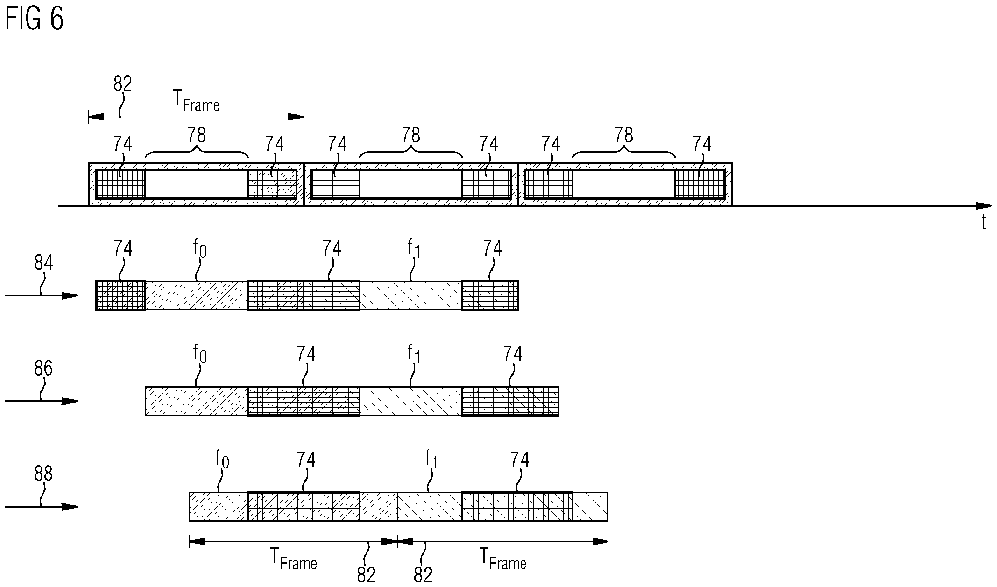

Für eine Inbetriebnahme des Systems 10 ist eine folgende Ausgestaltung vorgesehen. Das Steuermodul 30 des Netzteils 12 wird so programmiert, dass es die Daten 56 mit dem Licht 20 als Lichtsignale gemäß dem zuvor erläuterten anhand von FIG 4 erläuterten Verfahren über die Signalleuchte 16 abgibt. Mit der Digitalkamera 22 des Smartphones 14 wird das die Lichtsignale enthaltende Licht 20 erfasst. Es ergibt sich durch das zeilenweise Auslesen der Lichtwerte 80 aus der Digitalkamera 22 ein Bild 70. FIG 5 zeigt eine schematische Darstellung des Bildes 70. Wie aus FIG 6 ersichtlich ist, enthält das Bild 70 vorliegend waagerechte Streifen beziehungsweise Zeilen 72 unterschiedlicher Helligkeit.

Mit dem vorliegend zeilenweisen Auslesen kann ein Bilddatensatz des Bildes 70 mit einer den Lichtsensorelementen 24 entsprechenden Anzahl an Bildpixeln gebildet werden. Die erfassten Lichtwerte 80 der Lichtsensorelemente 24 aller Zeilen 72 werden in einem Auslesezyklus genau einmal ausgelesen. Dabei werden jedem Bildpixel Lichtwertdaten von jeweils genau einem jeweiligen Lichtsensorelement 24 zugeordnet.

FIG 6 zeigt eine schematische Signaldiagrammdarstellung zu einer ersten Situation in Bezug auf das zeilenweise Auslesen von Lichtsensorelementen 24 der Kamera 22. In FIG 6 ist in der obersten Zeile ein Datenstrom aus der Kamera 22 dargestellt, der vorliegend aus zeitlich aufeinanderfolgenden Rahmen 82 gebildet ist. Jeder Rahmen 82 weist an seinem Beginn und an seinem Ende einen jeweiligen Abschnitt 74 auf, in dem protokollmäßig vorgegebene Daten angeordnet sind. Diese Daten können zum Beispiel eine Rahmenkennzeichnung, Informationen zu einer Kodierungsart, Daten in Bezug auf eine Fehlerkorrektur und/oder dergleichen aufweisen. Jeder Rahmen hat einen Abschnitt 78, in dem Lichtwertdaten der jeweils ausgelesenen Lichtsensorelemente 24 einer jeweiligen Zeile angeordnet sind. In der Ausgestaltung gemäß FIG 6 folgen die Rahmen zeitlich unmittelbar aufeinander.

In Signaldarstellungen 84, 86, 88 sind die ausgelesenen Lichtwerte aus den Lichtsensorelementen 24 von drei aufeinanderfolgenden Zeilen 72 des Bildes 70 gemäß FIG 5 dargestellt. Wie aus FIG 6 ersichtlich ist, ergibt sich in Bezug auf die erfassten Lichtwerte ein zeitlicher Versatz, weil die jeweiligen Zeilen 72 zeitlich nacheinander ausgelesen werden. Dies bedingt einen Rolling-Shutter-Effekt. Wie aus FIG 6 ersichtlich ist, sind drei unterschiedliche Phasenlagen 84, 86, 88 dargestellt, bei denen die jeweils erfassten Frequenzen f0 und f1 zeitlich aufeinander folgen und gegenüber den benachbarten Zeilen 72 zeitlich versetzt sind. Ferner ergeben sich aufgrund der Rahmenstruktur der Rahmen 82 auch hier die Bereiche 74, die nicht erfasste Zeitabschnitte der Signalverläufe beziehungsweise Phasenlagen 84, 86, 88 umfassen.

In dieser Ausgestaltung ist eine zeitliche Länge eines jeweiligen Rahmens 82 im Wesentlichen konstant, wobei die Rahmen 82 zeitlich im Wesentlichen unmittelbar aufeinander folgen. Die Dauer eines Kanalsymbols, was dem Übermitteln des Lichtsignals mit einer der Frequenzen f₀, f₁, f₂, f₃, entspricht, kann dadurch auf die zeitliche Erstreckung des jeweiligen Rahmens 82 beschränkt werden, ohne dass ein Verlust eines Symbols hinzunehmen wäre.

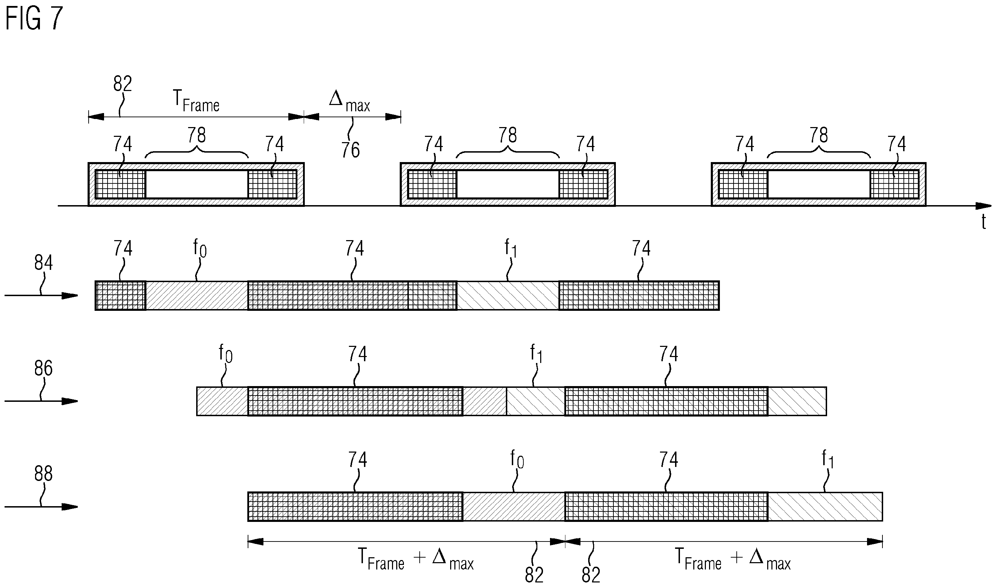

FIG 7 zeigt eine weitere schematische Signaldiagrammdarstellung wie FIG 6 zu einer zweiten Situation in Bezug auf das zeilenweise Auslesen von der Lichtsensorelemente 24 der Kamera 22 gemäß FIG 2, die auf der zur FIG 6 beschriebenen ersten Situation basiert, weshalb ergänzend auf die diesbezüglichen Ausführungen verwiesen wird. Im Folgenden werden lediglich die Unterschiede erläutert.

Die Situation gemäß FIG 7 unterscheidet sich von der Situation gemäß FIG 6 dadurch, dass die Rahmen 82 zeitlich nicht unmittelbar aufeinander folgen. Die Rahmen 82 sind untereinander durch jeweilige Rahmenabstände 76 voneinander getrennt, wobei die Zeitdauer eines jeweiligen Rahmenabstands 76 nicht konstant zu sein braucht, sondern lediglich etwa im Mittel einer Zeitdauer eines Rahmens 82 entsprechen kann. In alternativen Ausgestaltungen kann der Rahmenabstand 76 natürlich auch anders auftreten. In der Regel hängt der Rahmenabstands 76 von einer jeweiligen Konstruktion der Digitalkamera 22 und/oder dem Smartphone 14 ab. Es können jedoch auch weitere Abhängigkeiten des Smartphones 14 den Rahmenabstand 76 beeinflussen. Damit die zuverlässige Übertragung der Daten 56 gewährleistet werden kann, ist es daher erforderlich, in diesem Fall die zeitliche Dauer eines jeweiligen Kanalsymbols länger als die zeitliche Dauer eines Rahmens 82 zu wählen, insbesondere mindestens etwa einer zeitlichen Dauer des Rahmens 82 plus der zeitlichen Dauer des Rahmenabstands 76. Wenn eine aktuelle zeitliche Dauer des Rahmenabstands 76 nicht bestimmt werden kann, wird hierfür vorzugsweise ein maximalauftretender Wert gewählt. Es ergibt sich hierdurch eine geringere maximale mögliche Frequenz für die höchste der Modulationsfrequenzen des Modulationsverfahrens 48.

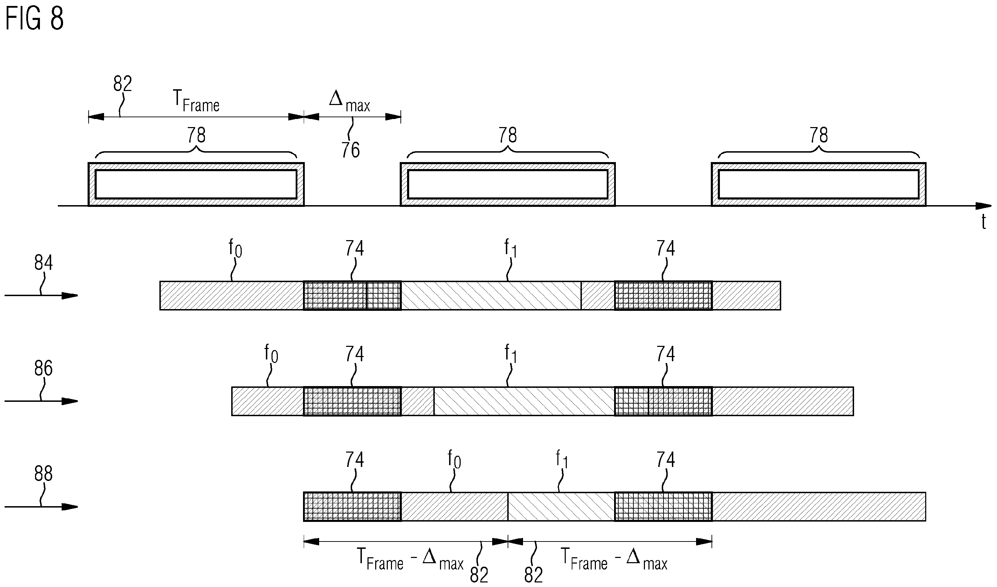

FIG 8 zeigt eine weitere schematische Signaldiagrammdarstellung wie FIG 6 zu einer dritten Situation in Bezug auf das zeilenweise Auslesen von Lichtsensorelementen 24 der Kamera 22 gemäß FIG 2. Im Folgenden werden lediglich die Unterschiede in Bezug auf die erste und die zweite Situation gemäß der FIG 6 und 7 erläutert, weshalb ergänzend auf die diesbezüglichen Ausführungen verwiesen wird.

Die Situation gemäß FIG 8 unterscheidet sich von der Situation gemäß der FIG 6 und 7 dadurch, dass die Rahmen 82 keine Abschnitte 74 mehr aufweisen. Dadurch kann das Erfassen der Lichtwertdaten durch die jeweiligen Rahmen 82 vergrößert werden, sodass, insbesondere in Bezug auf FIG 7, eine erhöhte Datenrate erreicht werden kann. Dies kann erreicht werden, obwohl die Rahmen 82 wie bei der Ausgestaltung gemäß FIG 7 durch Rahmenabstände 76 voneinander zeitlich getrennt sind. Wie aus FIG 8 ersichtlich ist, ergeben sich nicht erfassbare Bereiche 74 für die jeweiligen Phasenlagen 84, 86, 88 lediglich etwa für zeitliche Erstreckungen der Rahmenabstände. Gegenüber der Ausgestaltung gemäß FIG 7 kann somit auch eine höhere Modulationsfrequenz für das Modulationsverfahren 48 vorgesehen werden.

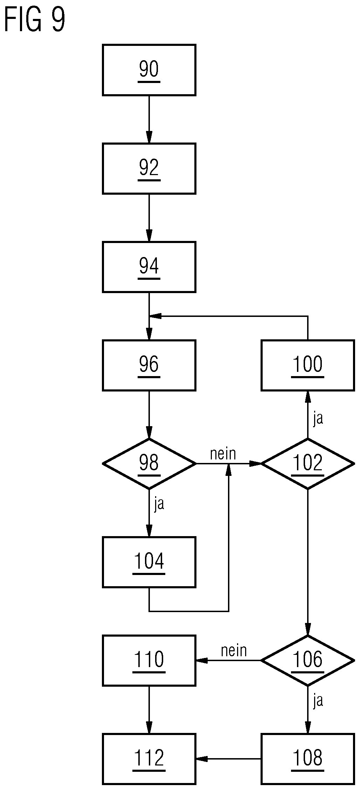

FIG 9 zeigt nun ein schematisches Flussdiagramm für eine Ausgestaltung zum Bestimmen eines Meldesignals, wie es gemäß der Erfindung unter Nutzung des zuvor erläuterten Systems 10 ausgegeben werden kann. Das Verfahren beginnt in einem Schritt 90, der einem Start des Verfahrens entspricht. In einem Schritt 92 werden eine Zählvariable und eine Auswerteanzahl initialisiert. Die Zählvariable wird in diesem Schritt auf eins gesetzt, wohingegen die Auswerteanzahl auf null gesetzt wird.

In einem folgenden Schritt 94 wird das Licht 20 von der Digitalkamera 22, insbesondere deren Lichtsensorelementen 24, erfasst. In einem Schritt 96 erfolgt das Auslesen einer durch die Zählvariable vorgegebenen Zeile 72 der Digitalkamera 22. In einem Schritt 98 werden die ausgelesenen Lichtwerte der Zeile 72 mit einem vorgegebene Mindestlichtwert verglichen. In dieser Vergleichsoperation wird im vorliegenden Fall bestimmt, dass eine vorgegebene Anzahl der Lichtwerte größer als der Mindestlichtwert ist. Ist diese Bedingung erfüllt, verzweigt das Verfahren zu einem Schritt 104, in dem die Auswerteanzahl um 1 erhöht wird. Sodann wird das Verfahren in einem Schritt 102 fortgeführt. Wird im Schritt 98 hingegen festgestellt, dass nicht ausreichend Lichtwerte größer als der Mindestlichtwert sind, verzweigt das Verfahren unmittelbar zum Schritt 102.

Im Schritt 102 wird die Zählvariable mit der Anzahl der Zeilen 72 der Digitalkamera 22 verglichen. Ist die Zählvariable kleiner als die Anzahl der Zeilen 72 der Digitalkamera 22, verzweigt das Verfahren zum Schritt 100, indem die Zählvariable um 1 erhöht wird. Das Verfahren wird dann mit Schritt 96 fortgesetzt. Ist hingegen die Zählvariable nicht kleiner als die Anzahl der Zeilen 72, verzweigt das Verfahren zum Schritt 106.

Im Schritt 106 erfolgt ein Vergleichen der Auswerteanzahl mit einer vorgegebenen Mindestanzahl. Ist die Auswerteanzahl größer als die Mindestanzahl, verzweigt die Verfahrensführung zum Schritt 108. Im Schritt 108 erfolgt die Verarbeitung der Lichtwerte durch das Smartphone 14, um die Daten 56 zu bestimmen. Das Verfahren endet dann im Schritt 112.

Ist hingegen die Auswerteanzahl nicht größer als die Mindestanzahl im Schritt 106, verzweigt das Verfahren zum Schritt 110, in dem ein Meldesignal über eine Anzeigeeinheit 56 des Smartphones 14 ausgegeben wird. Das Meldesignal kann zum Beispiel eine Information für den Nutzer umfassen, die den Nutzer darauf hinweist, dass eine zuverlässige Übermittlung der Daten 56 aktuell nicht möglich ist. Das Verfahren endet auch hier im Schritt 112.

Die Verfahrensführung kann natürlich nahezu beliebig oft oder auch bei Auftreten vorgegebener Ereignisse wiederholt werden.

Erfolgt in einem weiteren Ausführungsbeispiel das Auslesen spaltenweise, ist die Verfahrensführung entsprechend angepasst.

Die Ausführungsbeispiele dienen ausschließlich der Erläuterung der Erfindung und sollen diese nicht beschränken.

### Bezugszeichenliste

- 10: System
- 12: Netzteil
- 14: Smartphone
- 16: Signalleuchte
- 18: Steuerleitung
- 20: Licht
- 22: Digitalkamera
- 24: Lichtsensorelemente
- 26: Zeile
- 28: Spalte
- 30: Steuermodul
- 32: Steuereinheit
- 34: Frequenzumtastmodulator
- 36: Datenspeicher
- 38: Frequenzumtastdemodulator
- 40: Verarbeitungseinheit
- 42: Bild
- 44: Bilddaten
- 46: Videodatenstrom
- 48: Modulationsverfahren
- 50: Anzeigeeinheit
- 52: Linse
- 54: Abstand
- 56: Daten
- 58: Graph
- 60: Initialisierungsbit
- 62: Startbit
- 64: positive Logik
- 66: Stoppbit
- 68: negative Logik
- 70: Bild
- 72: Zeilen
- 74: Abschnitt
- 76: Rahmenabstand
- 78: Abschnitt
- 80: Lichtwert
- 82: Rahmen
- 84: Phasenlage
- 86: Phasenlage
- 88: Phasenlage
- 90: Start
- 92: Zählvariable und Auswerteanzahl initialisieren
- 94: Empfangen von Licht
- 96: Auslesen einer durch die Zahlvariable vorgegebenen Zeile der Digitalkamera
- 98: Vergleichen ausgelesener Lichtwerte mit einem Mindestlichtwert
- 100: Zählvariable um 1 erhöhen
- 102: Zählvariable mit der Anzahl der Zeilen vergleichen
- 104: Auswerteanzahl um 1 erhöhen
- 106: Vergleichen der Auswerteanzahl mit einer Mindestanzahl
- 108: Verarbeiten der ausgelesenen Lichtwerte
- 110: Ausgabe Meldesignal
- 112: Ende
- f0: Modulationsfrequenz
- f1: Modulationsfrequenz
- f2: Modulationsfrequenz
- f3: Modulationsfrequenz

## Patentansprüche

1. Verfahren zum Übermitteln von Daten (56) eines Funktionsgeräts (12) mittels eines Lichtsignals an ein mobiles Auswertegerät (14), wobei das Funktionsgerät (12) ein Steuersignal für eine Signalleuchte (16) des Funktionsgeräts (12) bereitstellt, wobei ein Betriebszustand des Funktionsgeräts (12) abhängig vom Steuersignal durch Abgeben von sichtbarem Licht (20) visuell erfassbar signalisiert wird, wobei das Steuersignal entsprechend den zu übermittelnden Daten (56) gemäß einem vorgegebenen Modulationsverfahren (48) moduliert wird, sodass das Lichtsignal zusammen mit dem den Betriebszustand signalisierenden Licht (20) durch die Signalleuchte (16) abgegeben wird, wobei das von der Signalleuchte (16) abgegebene Licht (20) von einer pixelbasierten digitalen Lichterfassungseinheit (22) des Auswertegeräts (14) erfasst wird, wobei die Lichterfassungseinheit (22) Lichtsensorelemente (24) aufweist, die in Zeilen (26) und Spalten (28) angeordnet sind, wobei erfasste Lichtwerte der Lichtsensorelemente (24) zeilenweise aufeinanderfolgend oder spaltenweise aufeinanderfolgend ausgelesen werden, wobei von den Lichtsensorelementen (24) erfasste Lichtwerte vom Auswertegerät (14) ausgewertet werden, um die übermittelten Daten (56) zu bestimmen,
**dadurch gekennzeichnet, dass**
das Auswertegerät (14) die erfassten Lichtwerte der Lichtsensorelemente (24) mit einem vorgegebenen Mindestlichtwert vergleicht und abhängig von dem Vergleichen diejenigen Zeilen (72) beziehungsweise diejenigen Spalten der Lichterfassungseinheit (22) für das Auswerten vom Auswertegerät (14) berücksichtigt werden, bei denen wenigstens ein erfasster Lichtwert größer als der Mindestlichtwert ist, wobei die für das Auswerten vom Auswertegerät (14) berücksichtigten Zeilen (72) beziehungsweise Spalten eine Auswerteanzahl bilden, wobei die Auswerteanzahl mit einer vorgegebenen Mindestanzahl verglichen wird und abhängig von dem Vergleichen der Auswerteanzahl mit der vorgegebenen Mindestanzahl ein Meldesignal vom Auswertegerät (14) abgegeben wird.

2. Verfahren nach Anspruch 1, **dadurch gekennzeichnet, dass** die Signalleuchte mit einem optischen Element (52) verbunden wird, wobei das optische Element (52) eine erste lichtaufnehmende Fläche aufweist, die das von der Signalleuchte abgegebene Licht (20) empfängt, und wobei das optische Element (52) eine von der ersten lichtaufnehmenden Fläche unterschiedliche zweite lichtabgebende Fläche aufweist, die größer als die erste Fläche ist und die das von der ersten lichtaufnehmenden Fläche empfangene Licht (20) abgibt.

3. Verfahren nach einem der vorhergehenden Ansprüche, **dadurch gekennzeichnet, dass** abhängig von dem Vergleichen der Auswerteanzahl mit der vorgegebenen Mindestanzahl mit dem Meldesignal eine Handlungsanweisung ausgegeben wird.

4. Verfahren nach einem der vorhergehenden Ansprüche, **dadurch gekennzeichnet, dass** abhängig von dem Vergleichen der Auswerteanzahl mit der vorgegebenen Mindestanzahl eine Abstandsänderung zwischen der Signalleuchte (16) und der Lichterfassungseinheit (22) vorgeschlagen wird.

5. Verfahren nach Anspruch 4, **dadurch gekennzeichnet, dass** die Abstandsänderung vom Auswertegerät (14) für einen Nutzer des Auswertegeräts (14) erfassbar ausgegeben wird.

6. Verfahren nach einem der vorhergehenden Ansprüche, **dadurch gekennzeichnet, dass** eine Lichtabgabefläche der Signalleuchte (16) ermittelt wird, abhängig von der Lichtabgabefläche ein Betriebsabstand bestimmt wird.

7. System (10) zum Übermitteln von Daten (56) eines Funktionsgeräts (12) des Systems (10) mittels eines Lichtsignals an ein mobiles Auswertegerät (14) des Systems (10), wobei das Funktionsgerät (12) ausgebildet ist, ein Steuersignal für eine Signalleuchte (16) des Funktionsgeräts (12) bereitzustellen, um einen Betriebszustand des Funktionsgeräts (12) abhängig vom Steuersignal durch Abgeben von sichtbarem Licht (20) visuell erfassbar zu signalisieren, wobei das Funktionsgerät (12) ferner ausgebildet ist, das Steuersignal entsprechend den zu übermittelnden Daten (56) gemäß einem vorgegebenen Modulationsverfahren (48) zu modulieren, um das Lichtsignal zusammen mit dem den Betriebszustand signalisierenden Licht (20) durch die Signalleuchte (16) abzugeben, wobei das Auswertegerät (14) eine pixelbasierte digitale Lichterfassungseinheit (22) zum Erfassen des von der Signalleuchte (16) abgegebenen Lichts (20) aufweist, wobei die Lichterfassungseinheit (22) Lichtsensorelemente (24) aufweist, die in Zeilen (26) und Spalten (28) angeordnet sind, wobei das Auswertegerät (14) ausgebildet ist, von den Lichtsensorelementen (24) erfasste Lichtwerte (80) zeilenweise aufeinanderfolgend oder spaltenweise aufeinanderfolgend auszulesen und die von den Lichtsensorelementen (24) erfassten Lichtwerte (80) auszuwerten, um die übermittelten Daten (56) zu bestimmen,
**dadurch gekennzeichnet, dass**
das Auswertegerät (14) ausgebildet ist, die erfassten Lichtwerte der Lichtsensorelemente (24) mit einem vorgegebenen Mindestlichtwert zu vergleichen und abhängig von dem Vergleichen diejenigen Zeilen beziehungsweise diejenigen Spalten der Lichterfassungseinheit (22) für das Auswerten zu berücksichtigen, bei denen wenigstens ein erfasster Lichtwert größer als der Mindestlichtwert ist, wobei die für das Auswerten vom Auswertegerät (14) berücksichtigten Zeilen beziehungsweise Spalten eine Auswerteanzahl bilden, wobei das Auswertegerät (14) ausgebildet ist, die Auswerteanzahl mit einer vorgegebenen Mindestanzahl zu vergleichen und abhängig von dem Vergleichen der Auswerteanzahl mit der vorgegebenen Mindestanzahl ein Meldesignal vom Auswertegerät abzugeben.

8. Funktionsgerät (12) des Systems (10) nach Anspruch 7.

9. Auswertegerät (14) des Systems (10) nach Anspruch 7.

10. Auswertegerät nach Anspruch 9, **gekennzeichnet durch** ein Smartphone oder ein Tablet, das eine Kamera als Lichterfassungseinheit (22) aufweist, die die erfassten Lichtwerte in Form eines Videodatenstroms (46) von Bildern (42) mit Bilddaten (44) bereitstellt, wobei auf dem Smartphone (14) eine Anwendung installiert ist, die die von der Kamera (22) bereitgestellten Bilddaten (44) auswertet, um die übermittelten Daten (56) zu bestimmen.

11. Rechnerprogrammprodukt für eine programmgesteuerte Rechnereinheit eines Auswertegeräts nach Anspruch 9 oder 10, wobei das Auswertegerät (14) eine pixelbasierte digitale Lichterfassungseinheit (22) zum Erfassen des von der Signalleuchte (16) abgegebenen Lichts (20) aufweist, wobei die Lichterfassungseinheit (22) Lichtsensorelemente (24) aufweist, die in Zeilen (26) und Spalten (28) angeordnet sind, wobei das Rechnerprogrammprodukt Anweisungen aufweist, die die Rechnereinheit veranlassen, von den Lichtsensorelementen (24) erfasste Lichtwerte (80) zeilenweise aufeinanderfolgend oder spaltenweise aufeinanderfolgend auszulesen und die von den Lichtsensorelementen (24) erfassten Lichtwerte (80) auszuwerten, um die übermittelten Daten (56) zu bestimmen, die erfassten Lichtwerte der Lichtsensorelemente (24) mit einem vorgegebenen Mindestlichtwert zu vergleichen und abhängig von dem Vergleichen diejenigen Zeilen beziehungsweise diejenigen Spalten der Lichterfassungseinheit (22) für das Auswerten zu berücksichtigen, bei denen wenigstens ein erfasster Lichtwert größer als der Mindestlichtwert ist, wobei die für das Auswerten vom Auswertegerät (14) berücksichtigten Zeilen beziehungsweise Spalten eine Auswerteanzahl bilden, wobei die Auswerteanzahl mit einer vorgegebenen Mindestanzahl verglichen wird und abhängig von dem Vergleichen der Auswerteanzahl mit der vorgegebenen Mindestanzahl ein Meldesignal vom Auswertegerät abgegeben wird.

12. Rechnerlesbares Medium, auf dem das Rechnerprogrammprodukt gemäß Anspruch 11 auslesbar von einer Rechnereinheit gespeichert ist.
